# EUROPEAN PATENT SPECIFICATION

(11) **EP 4 534 395 B1**
(45) Date of publication and mention of the grant of the patent: **25.02.2026**
(21) Application number: 24193094.0
(22) Date of filing: 06.08.2024
(51) Int. Cl.: B62J 17/02, H01R 13/52, H01R 13/74

(54) **STRADDLED VEHICLE**
GRÄTSCHSITZFAHRZEUG
VÉHICULE À SELLE

(30) Priority: 02.10.2023 JP 2023171356
(43) Date of publication of application: 09.04.2025
(73) Proprietor: Yamaha Hatsudoki Kabushiki Kaisha, Shizuoka-ken 438-8501, (JP)
(72) Inventor: Morishita, Daisuke, Iwata-shi, Shizuoka, 438-8501 (JP); Suzuki, Keisuke, Iwata-shi, Shizuoka, 438-8501 (JP); Kurosu, Hirotoshi, Iwata-shi, Shizuoka, 438-8501 (JP)
(74) Representative: Grünecker Patent- und Rechtsanwälte PartG mbB

(56) References cited:
- BR-A2- 102014 026 222
- DE-A1- 102019 128 575
- US-A1- 2010 077 807
- US-A1- 2018 090 875
- US-B2- 11 515 662

## Description

The present invention relates to a straddled vehicle according to the preamble of independent claim 1. Such a straddled vehicle can be taken from the prior art document US 2018/090875 A1.

Such a currently-used type of devices includes one having a tank and a tank shroud. See, for example, JP 2015-83395 A. The tank stores a fuel. The tank shroud is located on a left side and a right side of the tank. The tank shroud extends from the tank to a head tube. The tank shroud includes an inner shroud and an outer shroud. The inner shroud is positioned near the tank in a transverse direction of the vehicle. The outer shroud is positioned apart from and outward of the inner shroud in the transverse direction of the vehicle.

The tank shroud has a left part provided with an article storage between the inner shroud and the outer shroud. The article storage includes a storage space. The storage space is formed by a bottom wall, a front wall, a rear wall, an outer wall, and an inner wall. The article storage is provided with a power supply connector on the rear wall. The power supply connector is connected to a battery. A power supply cord for an electronic device like a smartphone is connected to the power supply connector by the driver.

However, the example of the currently-used apparatus with such a construction has the following drawback. That is, the power supply connector is provided on the rear wall of the currently-used apparatus, and thus a socket of the power supply connector is opened forward. Consequently, the power supply connector is invisible to the driver. As a result, it is difficult for the driver to attach the power supply cord to the power supply connector.

It is the object of the present invention to provide a straddled vehicle in which a power supply cord can be attached to a power supply connector easily.

According to the present invention said object is solved by a straddled vehicle having the features of independent claim 1. Preferred embodiments are laid down in the dependent claims.

Accordingly, it is provided a straddled vehicle including a frame provided with a head tube on its front part, a fuel tank configured to store a fuel and attached to a part of the frame more rearward than the head tube, a side cover extending from the fuel tank to the head tube in side view, and a power supply connector provided on the side cover and configured to supply power to an electronic device, wherein a power supply cord is inserted into the power supply connector in a forward and downward direction and is pulled out from the power supply connector in a rearward and upward direction.

According to the present teaching, the power supply connector is provided on the side cover such that the power supply cord it is inserted into the power supply connector in the forward and downward direction and is pulled out from the power supply connector in the rearward and upward direction. Consequently, the power supply connector is easily visible to the driver even when the driver sits astride the straddled vehicle. As a result, it is easy for the driver to attach the power supply cord to the power supply connector.

Moreover, according to the invention the side cover has an opening in its front part, the power supply connector includes a body case and a cord extending from the body case, and the side cover further includes a cover configured to cover the body case and the cord from forward.

The cover covers the body case and the cord from forward. Consequently, the body case and the cord are invisible from the opening of the side cover. This results in enhanced aesthetics of the straddled vehicle.

Moreover, it is preferred in the aspect of the present teaching that the cover is an elastic member.

Since the cover is an elastic member, the body case and the cord can be accessed without removing the cover during maintenance. Thus, the maintainability of the straddled vehicle can be improved.

Moreover, it is preferred in the aspect of the present teaching that the cover is opened in a downstream direction of the opening.

Heat can be released in the downstream direction of the opening in the cover even when the body case or the cord is heated by supplying electricity. This results in suppression of heating of the power supply connector.

Moreover, it is preferred that the side cover includes an outer panel member arranged more outward than the fuel tank and a ceiling member extending from the fuel tank to an upper inner wall of the outer panel member, and that the power supply connector is attached to the ceiling member.

Among the outer panel member and the ceiling member constituting the side cover, the power supply connector is attached to the ceiling member. Consequently, the power supply connector is easily visible to the driver while the driver sits astride the straddled vehicle. Moreover, the driver can easily access the ceiling member of the side cover. Consequently, it is easy for the driver to connect the power supply cord to the power supply connector.

Moreover, it is preferred in the aspect of the present teaching that the body case has a cylindrical shape and includes an alignment rib on a part of its outer circumferential face, that the ceiling member has an insertion opening for inserting the body case and a notch for housing the alignment rib and aligning the body case around an axis, and that the notch is longer than the alignment rib in a diametrical direction of the body case.

The notch is longer than the alignment rib in the diametrical direction of the body case. Consequently, the notch has a gap although the body case is inserted into the insertion opening and the alignment rib is aligned in the notch. As a result, it is possible to prevent accumulation of raindrops on the ceiling member, so that the power supply connector can be suppressed from being under water.

Moreover, it is preferred in the aspect of the present teaching that the body case includes a detachable cap for covering a socket connected to the cord, that the cap is moved upward from an upper face of the ceiling member and is opened, and that the ceiling member includes a recess rearward of the cap.

The body case includes the cap for covering the socket. The cap is moved upward and is opened. When opening the cap, the driver can easily move the cap since the recess is formed in the ceiling member.

Moreover, it is preferred in the aspect of the present teaching that the straddled vehicle includes a coupler having a first coupler connected to an electrical source cord extending from a battery and a second coupler detachably connected to the cord.

Connection of the first coupler to the second coupler makes electrical connection between the electrical source cord and the cord. The couplers can make easy connection between the power supply connector attached to the side cover and the battery.

Moreover, it is preferred in the aspect of the present teaching that the coupler having the first coupler and the second coupler whose one end connected to each other is covered with the cover from forward.

The cover makes the coupler invisible from forward. This achieves enhanced aesthetics.

Moreover, it is preferred in the aspect of the present teaching that a right part and a left part of the side cover are arranged on a right side and a left side of the fuel tank, respectively, and that the power supply connector is provided on the left part of the side cover selected from the left part and the right part of the side cover.

The power supply connector is provided on the left part of the side cover. The driver is normally on the left side of the straddled vehicle when the straddled vehicle stops and is inclined leftward by a side stand. Accordingly, the power supply connector is easily visible to the driver. Moreover, the driver easily applies force when inserting the power supply cord into the power supply connector. This results in easy connection of the power supply cord to the power supply connector by the driver.

Moreover, it is preferred in the aspect of the present teaching that the power supply connector is visible on an upper face of the side cover in side view.

Since the power supply connector protrudes upward from the side cover, the driver can easily see an operation object. Consequently, the driver can easily connect the power supply cord to the power supply connector.

Moreover, it is preferred in the aspect of the present teaching that the power supply connector is visible on an upper face of the side cover in front view.

Since the power supply connector protrudes upward from the side cover, the driver can easily see an operation object. Consequently, the driver can easily connect the power supply cord to the power supply connector.

### Advantageous Effects of Invention

In the straddled vehicle according to the present teaching, the power supply connector is provided on the side cover such that the power supply cord is inserted into the power supply connector in the forward and downward direction and is pulled out from the power supply connector in the rearward and upward direction. Consequently, the power supply connector is easily visible to the driver even when the driver sits astride the straddled vehicle. As a result, it is easy for the driver to attach the power supply cord to the power supply connector.

### Brief Description of Drawings

Fig. 1 is a left side view of a straddled vehicle according to an embodiment.
Fig. 2 is a front view of the straddled vehicle according to the embodiment.
Fig. 3 is an exploded perspective view of a tank shroud.
Fig. 4 (a) is a front view, Fig. 4(b) is a plan view, and Fig. 4(c) is a left side view of the tank shroud.
Fig. 5 illustrates an interior construction of the tank shroud (cover not shown).
Fig. 6 illustrates the interior construction of the tank shroud.
Fig. 7 is a sectional view on arrow 100-100 in Fig. 4(b).
Fig. 8 is an exploded perspective view of an air guide and a power supply connector.
Fig. 9 is a partially enlarged view of the power supply connector in Fig. 7.
Fig. 10 is a sectional view on arrow 101-101 in Fig. 9.
Fig. 11 is an external view seen from a 102 direction in Fig. 9.
Fig. 12 illustrates the power supply connector in Fig. 11 with a cap not shown.

### Description of Embodiments

The following describes one preferred embodiment with reference to drawings.

### <1. Outline construction of straddled vehicle>

A straddled vehicle 1 is a street type vehicle. A driver (also called rider) rides on the straddled vehicle 1, and operates the straddled vehicle 1.

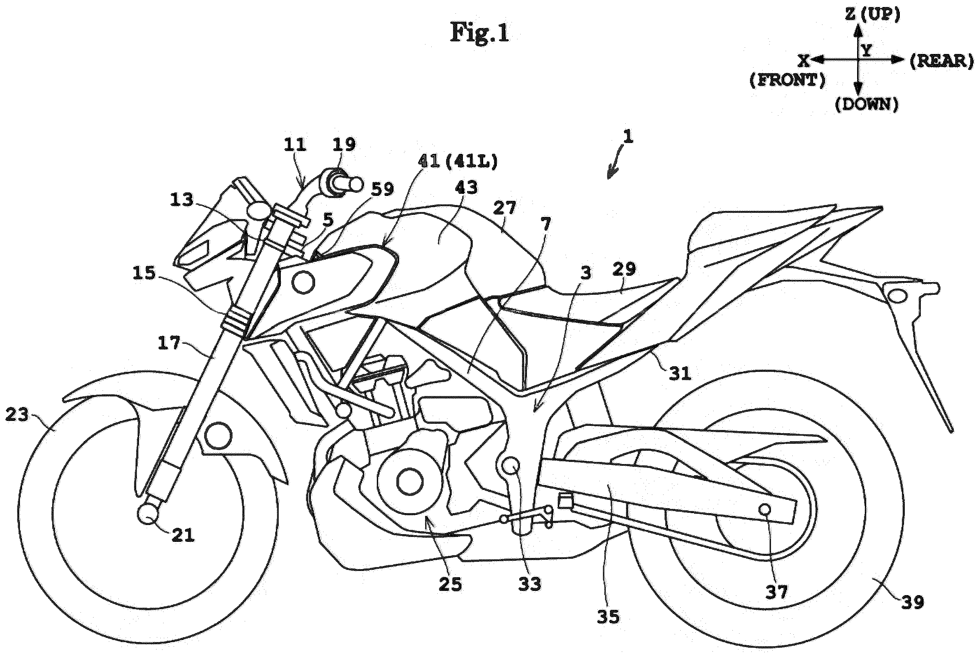

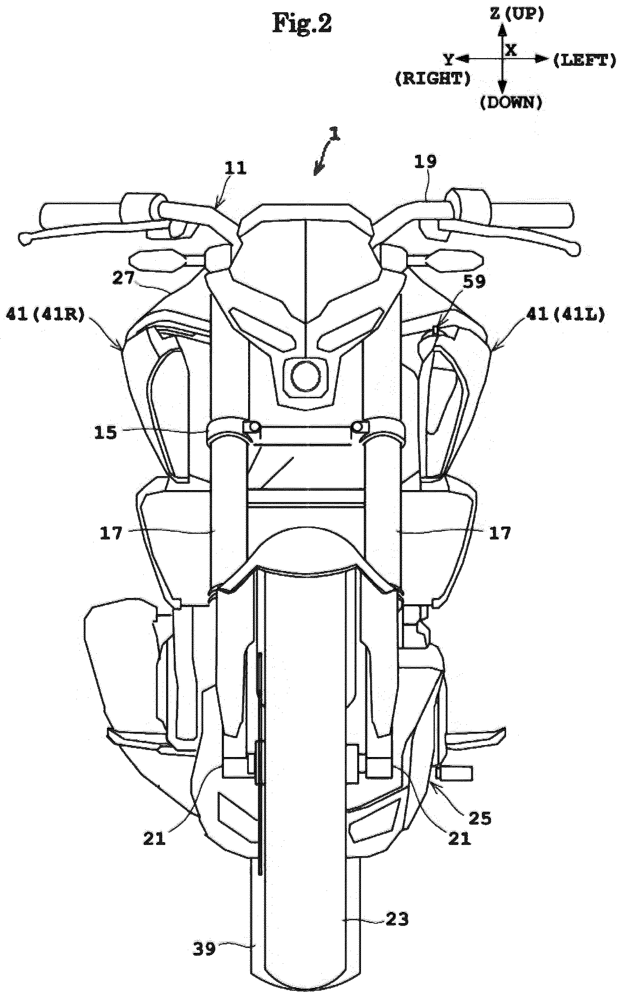

Fig. 1 is a left side view of the straddled vehicle according to an embodiment. Fig. 2 is a front view of the straddled vehicle according to the embodiment.

Fig. 1 shows a vehicle front-back direction X, a vehicle transverse direction Y, and a vehicle up-down direction Z of the straddled vehicle 1. The vehicle front-back direction X, vehicle transverse direction Y, and vehicle up-down direction Z are defined with reference to a driver riding on the straddled vehicle 1. The vehicle front-back direction X, vehicle transverse direction Y, and vehicle up-down direction Z are perpendicular to one another. The vehicle front-back direction X and vehicle transverse direction Y are horizontal. The vehicle up-down direction Z is vertical.

The terms "forward", "rearward", "upward", "downward", "rightward", and "leftward", respectively, mean "forward", "rearward", "upward", "downward", "rightward", and "leftward" as seen from the driver riding on the straddled vehicle 1. Unless otherwise stated in this specification, "forward" and "rearward" include not only directions parallel to the vehicle front-back direction X but also directions close to the vehicle front-back direction X. The directions close to the vehicle front-back direction X are, for example, directions at angles not exceeding 45 degrees to the vehicle front-back direction X. Similarly, unless otherwise indicated, "rightward" and "leftward" include not only directions parallel to the vehicle transverse direction Y but also directions close to the vehicle transverse direction Y. Unless otherwise specified, "upward" and "downward" include not only directions parallel to the vehicle up-down direction Z but also directions close to the vehicle up-down direction Z. For reference, the drawings show front, rear, up, down, right, and left, as appropriate.

It is to be understood that, in this specification, various expressions describing arrangements have the following meanings respectively. The following description will be made taking the vehicle transverse direction Y for example, and the same may apply to the vehicle front-back direction X and vehicle up-down direction Z.

The expression "Member Ma is located more rightward/leftward than Member Mb," defines a position in the vehicle transverse direction Y of Member Ma relative to Member Mb, and does not define a position in the vehicle front-back direction X or the vehicle up-down direction Z of Member Ma relative to Member Mb. In the case of this expression, Member Ma may, or may not overlap Member Mb in a side view of the straddled vehicle 1.

The expression "Member Ma is located rightward/leftward of Member Mb," without reference to a looking direction defines a position in the vehicle transverse direction Y of Member Ma relative to Member Mb, a position in the vehicle front-back direction X of Member Ma relative to Member Mb, and a position in the vehicle up-down direction Z of Member Ma relative to Member Mb. This expression means that Member Ma is located more rightward/leftward than Member Mb, and that at least part of Member Ma overlaps at least part of Member Mb in a side view of the straddled vehicle 1.

The expression "Member Ma is located rightward/leftward of Member Mb in plan view of the straddled vehicle 1," defines a position in the vehicle transverse direction Y of Member Ma relative to Member Mb, and a position in the vehicle front-back direction X of Member Ma relative to Member Mb, and does not define a position in the vehicle up-down direction Z of Member Ma relative to Member Mb. This expression means that Member Ma is located more rightward/leftward than Member Mb, that a front end of Member Ma is positioned more forward than a rear end of Member Mb, and that a rear end of Member Ma is located more rearward than a front end of Member Mb.

The expression "Member Ma is located rightward/leftward of Member Mb in front view of the straddled vehicle 1," defines a position in the vehicle transverse direction Y of Member Ma relative to Member Mb, and a position in the vehicle up-down direction Z of Member Ma relative to Member Mb, and does not define a position in the vehicle front-back direction X of Member Ma relative to Member Mb. This expression means that Member Ma is located more rightward/leftward than Member Mb, that an upper end of Member Ma is positioned higher than a lower end of Member Mb, and that a lower end of Member Ma is located lower than an upper end of Member Mb.

In the present specification, the language "in side view of the straddled vehicle 1" is referred to as "in side view of the vehicle", as appropriate. Likewise, the language "in plan view of the straddled vehicle 1" is referred to as "in plan view of the vehicle", as appropriate. The language "in front view of the straddled vehicle 1" is referred to as "in front view of the vehicle", as appropriate.

The straddled vehicle 1 includes a body frame 3. The vehicle body frame 3 includes a head tube 5 and a main frame 7. The body frame 3 includes the head tube 5 at its front part. The head tube 5 is located at a front part of the straddled vehicle 1. The main frame 7 extends rearward and downward from the head tube 5 in side view of the vehicle.

The straddled vehicle 1 includes a steering device 11. The steering device 11 is supported by the body frame 3. Specifically, the steering device 11 is supported by the head tube 5. The steering device 11 is rotatable relative to the body frame 3.

The steering device 11 includes a top bridge 13, a bottom bridge 15, and a front suspension 17. The top bridge 13 is located higher than the head tube 5. The bottom bridge 15 is located lower than the top bridge 13. The bottom bridge 15 is located lower than the head tube 5. The front suspension 17 is supported by the top bridge 13 and the bottom bridge 15. The front suspension 17 extends forward and downward from the top bridge 13 in side view of the vehicle. The front suspension 17 extends to a position lower than the bottom bridge 13.

The steering device 11 includes a handlebar 19. The handlebar 19 is supported by the top bridge 13. The handlebar 19 is entirely located higher than the top bridge 13, for example. The driver grips the handlebar 19 and steers the steering device 11.

The steering device 11 includes a front axle 21. The front axle 21 is located lower than the bottom bridge 15. The front axle 21 is supported by the front suspension 17. The front axle 21 is provided on a lower end of the front suspension 17.

The straddled vehicle 1 includes a front wheel 23. The front wheel 23 is supported by the steering device 11. Specifically, the front wheel 23 is supported by the front axle 21. The front wheel 23 is rotatable about the front axle 21.

The straddled vehicle 1 includes an engine 25. The engine 25 is supported by the body frame 3. Specifically, the engine 25 is supported by the main frame 7. The engine 25 is fixed to the body frame 3. The engine 25 does not swing relative to the vehicle body frame 3. The engine 25 generates a driving force for traveling the straddled vehicle 1.

At least part of the engine 25 is located below the main frame 7 in side view of the vehicle. The engine 25 is located rearward of the steering device 11 in side view of the vehicle.

The straddled vehicle 1 includes a fuel tank 27. The fuel tank 27 is supported by the body frame 3. Specifically, the fuel tank 27 is supported by the main frame 7. The fuel tank 27 stores a fuel to be supplied to the engine 25.

At least part of the fuel tank 27 is located above the main frame 7 in side view of the vehicle. The fuel tank 27 is located rearward of the steering device 11 in side view of the vehicle. The fuel tank 27 is located above the engine 25 in side view of the vehicle.

The straddled vehicle 1 includes a seat 29. The seat 29 is supported by the body frame 3. Specifically, the seat 29 is supported by a seat frame 31 of the body frame 3. The seat frame 31 extends rearward of the body frame 3. The seat frame 31 is inclined rearward and upward in side view of the vehicle. The seat frame 31 is attached to the main frame 7.

The seat 29 is located more rearward and higher than the engine 25. The seat 29 is located rearward of the fuel tank 27 in side view of the vehicle. At least part of the seat 29 is located at a position equal in level to the fuel tank 27.

The straddled vehicle 1 includes a pivot shaft 33, a swing arm 35, a rear axle 37, and a rear wheel 39.

The pivot shaft 33 is supported by the body frame 3. Specifically, the pivot shaft 33 is supported by the main frame 7. The swing arm 35 is supported by the pivot shaft 33. The swing arm 35 is swingable about the pivot shaft 33 relative to the body frame 3. The swing arm 35 extends rearward from the pivot shaft 33 in side view of the vehicle. The rear axle 37 is supported by a rear part of the swing arm 35. The rear wheel 39 is supported by the rear axle 37. The rear wheel 39 is rotatable about the rear axle 37. The swing arm 35 and the rear wheel 39 are located rearward of the engine 25 in side view of the vehicle. The swing arm 35 and the rear wheel 39 are located lower than the fuel tank 27 and the seat 29.

The fuel tank 27 includes a tank shroud 41 on its left side and its right side in the vehicle transverse direction Y in plan view of the vehicle. If the tank shroud 41 on the right and left sides is distinguished for explanation, a left tank shroud 41 is referred to as a tank shroud 41L and a right tank shroud 41 is referred to as a tank shroud 41R.

The tank shroud 41 partially overlaps the fuel tank 27 in side view of the vehicle. The tank shroud 41 extends from the fuel tank 27 to the head tube 5. The tank shroud 41 partially covers the head tube 5 in side view of the vehicle. The tank shroud 41 is long in the vehicle front-back direction X. The tank shroud 41 is a side board or a partition provided on the fuel tank 27. The tank shroud 41 is sometimes called a shroud simply. The tank shroud 41 is sometimes called a tank cover. The tank shroud 41 is sometimes called a lateral wall board or a partition member.

### <2. Detailed construction of tank shroud>

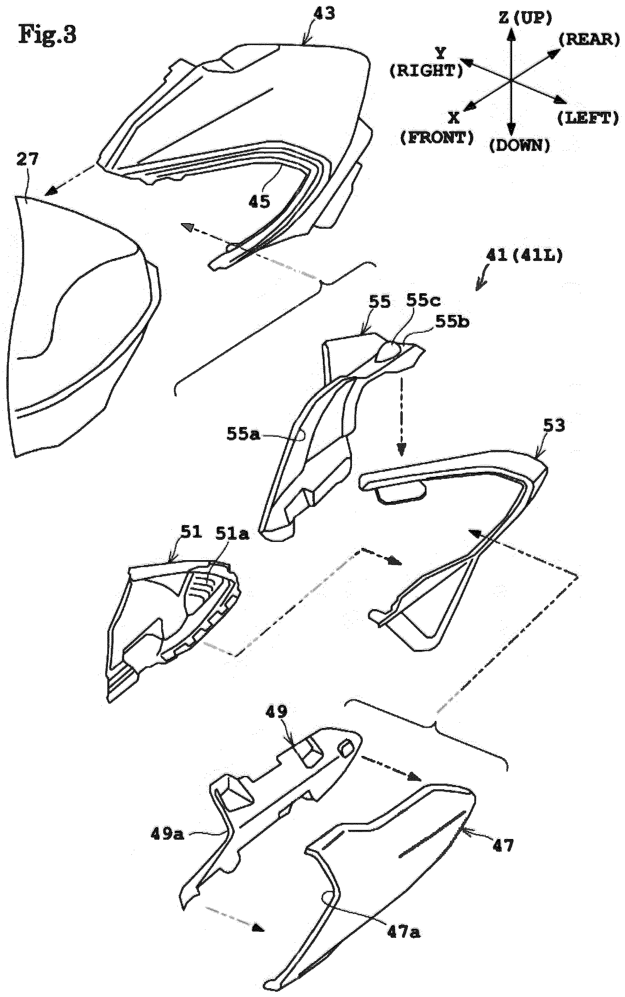

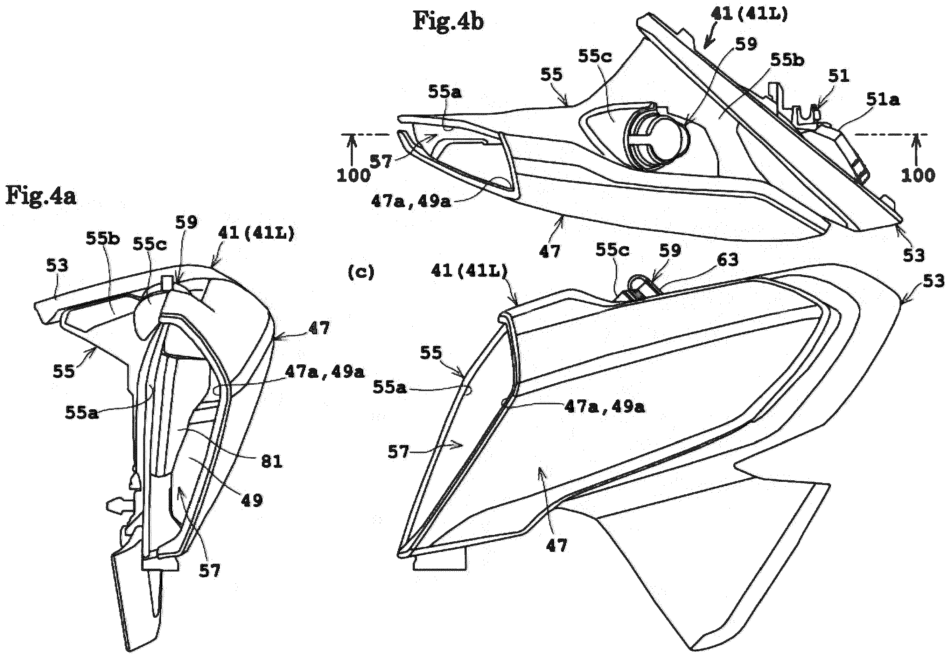

Now, reference is made to Figs. 3 and 4. Fig. 3 is an exploded perspective view of the tank shroud. Fig. 4(a) is a front view, Fig. 4(b) is a plan view, and Fig. 4(c) is a left side view of the tank shroud.

Hereunder, explanation is only made of the left tank shroud 41L of the left and right tank shrouds 41L and 41R. The right tank shroud 41R differs from the left tank shroud 41L in construction of an air guide 55.

A fuel tank cover 43 is attached to the fuel tank 27. The fuel tank cover 43 is attached so as to cover an outer circumferential face of the fuel tank 27. The fuel tank cover 43 has an attachment notch 45. The attachment notch 45 is formed by cutting out an area of the fuel tank cover 43 corresponding to front right and left sides of the fuel tank 27. The attachment notch 45 is formed by cutting out an area of the fuel tank cover 43, the area being in a front direction X and the vehicle transverse direction Y of the fuel tank 27. The tank shroud 41L is attached to the attachment notch 45 and then is attached to the fuel tank 27 together with the fuel tank cover 43.

The tank shroud 41L includes an air scoop 47, an inner panel 49, an air grille 51, a duct 53, and an air guide 55. The air scoop 47 is also called an outer shroud. The air guide 55 is also called an inner shroud.

The air scoop 47 constitutes an outermost member in the vehicle transverse direction Y. The air scoop 47 constitutes an outer panel of the tank shroud 41L. The air scoop 47 is a thin plate member in the vehicle up-down direction Z and the vehicle front-back direction X. The air scoop 47 has a recess 47a formed therein. The recess 47a protrudes leftward in the vehicle transverse direction Y. The air scoop 47 is formed by a plate member curved along a plane in the vehicle front-back direction X and the vehicle up-down direction Z.

The inner panel 49 is attached on the right side of the air scoop 47 in the vehicle transverse direction Y. The inner panel 49 is attached to the recess 47a of the air scoop 47. The inner panel 49 has a recess 49a formed therein with the same shape as that of the recess 47a in the air scoop 47. The recess 49a protrudes leftward in the vehicle transverse direction Y. The inner panel 49 is formed by a plate member curved along a plane in the vehicle front-back direction X and vehicle up-down direction Z.

The air grille 51 is attached to the duct 53. The air grille 51 is attached inside of the duct 53. The air grille 51 has a slit outlet 51a formed therein rearward in the vehicle front-back direction X. The air grille 51 guides air, caught into from a front part, rearward of the outlet 51a.

The air guide 55 constitutes an innermost part of the tank shroud 41L in the vehicle transverse direction Y. The air guide 55 is located closest to the fuel tank 27 in the vehicle transverse direction Y. The air guide 55 is a thin-plate member along a plane in the vehicle up-down direction Z and the vehicle front-back direction X. The air guide 55 has a recess 55a formed therein. The recess 55a protrudes rightward in the vehicle transverse direction Y. The air guide 55 is formed by a thin-plate member. The air guide 55 has a ceiling portion 55b formed at an upper part thereof in the vehicle up-down direction Z. The ceiling portion 55b extends from the fuel tank 27 to upper inner walls of the air scoop 47 and the inner panel 49.

The ceiling portion 55b of the air guide 55 has an attachment projection 55c formed therein. The attachment projection 55c protrudes from the ceiling portion 55b upward in the vehicle up-down direction Z.

The air guide 55 is attached to the duct 53, and then is attached to the attachment notch 45 of the fuel tank cover 43 together with the air scoop 47, the inner panel 49, and the air grille 51. The fuel tank cover 43 is attached to the fuel tank 27. Thereby, the tank shroud 41L is attached to the fuel tank 27. The tank shroud 41L is assembled in such a manner as described above, whereby an opening 57 is formed forward in the vehicle front-back direction X with the recess 49a and the recess 55a.

A power supply connector 59 is attached to the attachment projection 55c. The power supply connector 59 supplies power to an electronic device. Examples of the electronic device include a portable phone, a smart phone, an imaging device for capturing a still image and a moving image, and a radar detector.

### <3. Attachment construction of power supply connector>

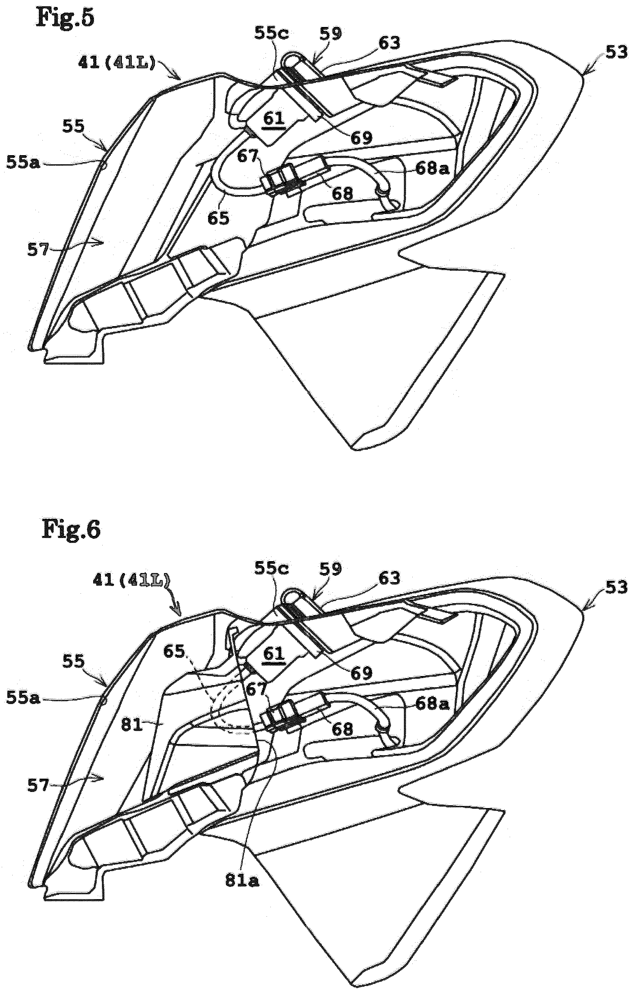

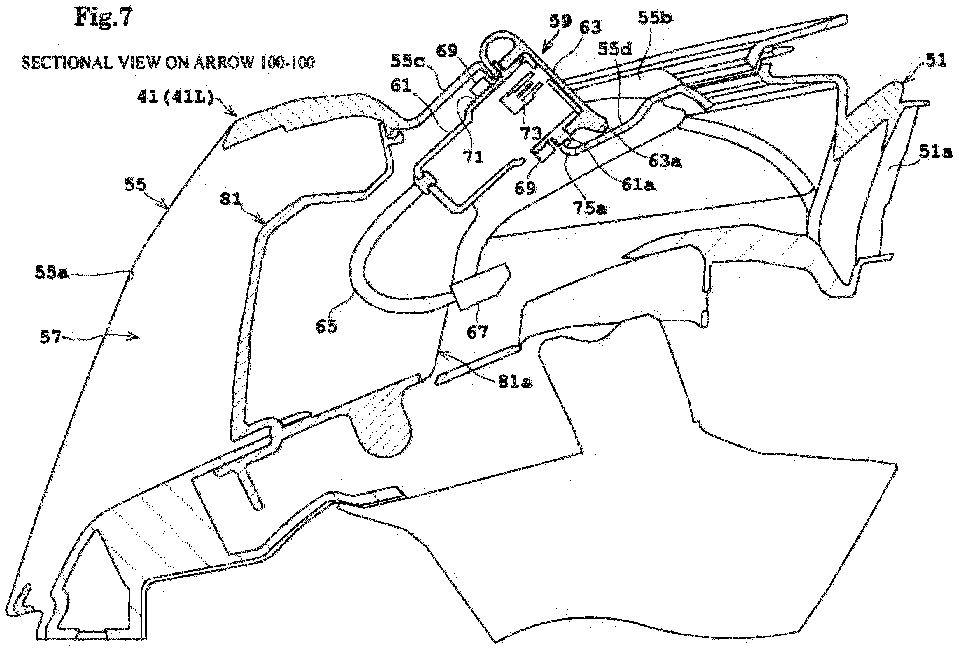

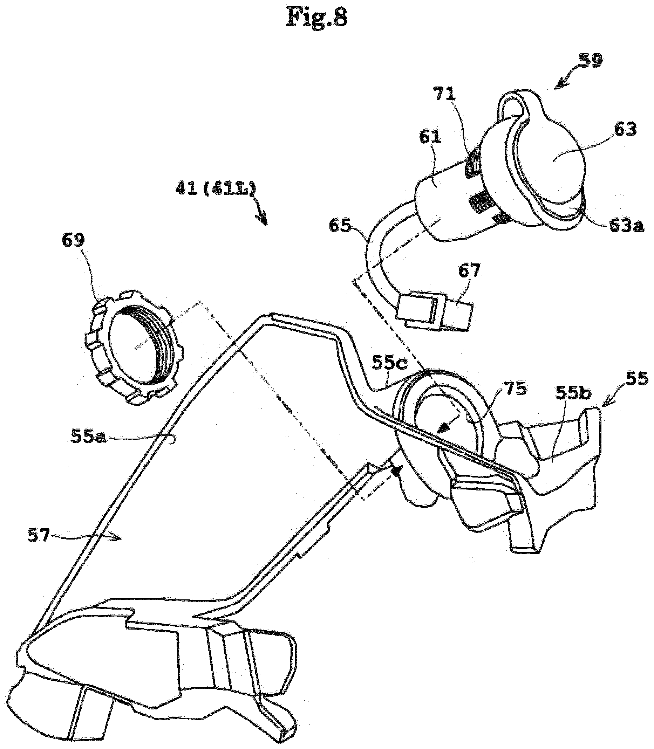

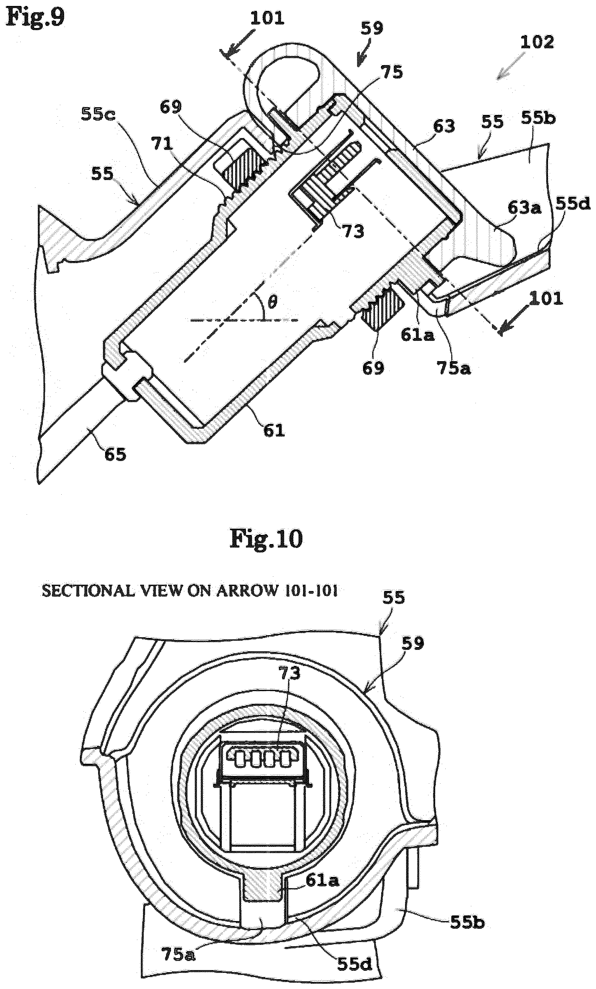

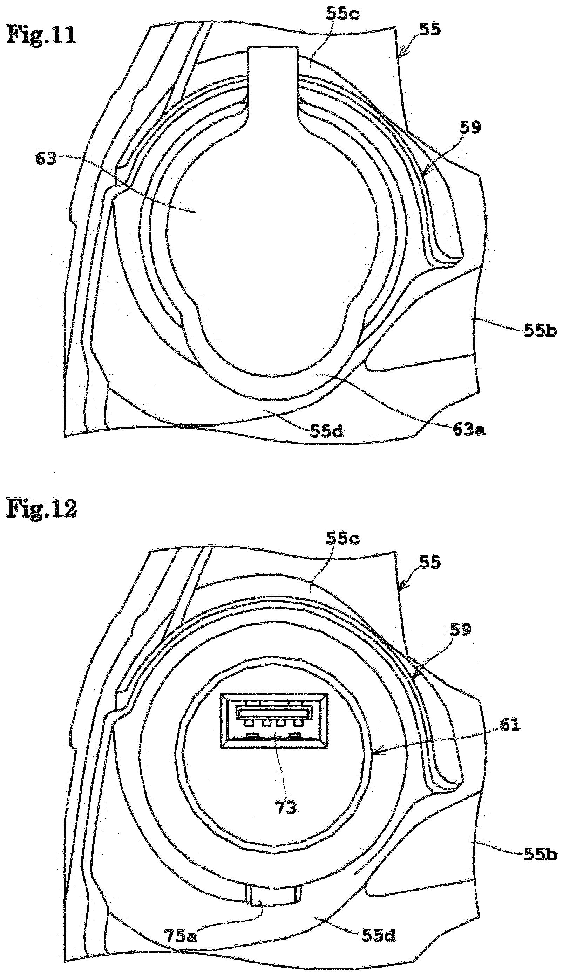

Reference is now made to Figs. 5 to 12. Fig. 5 illustrates an interior construction of the tank shroud (cover not shown). Fig. 6 illustrates the interior construction of the tank shroud. Fig. 7 is a sectional view on arrow 100-100 in Fig. 4(b). Fig. 8 is an exploded perspective view of the air guide and the power supply connector. Fig. 9 is an enlarged view of the power supply connector in Fig. 7. Fig. 10 is a sectional view on arrow 101-101 in Fig. 9. Fig. 11 is an external view seen from a direction of arrow 102 in Fig. 9. Fig. 12 illustrates the power supply connector in Fig. 11 with a cap not shown.

The power supply connector 59 includes a body case 61, a cap 63, a cord 65, a male coupler 67, and a latch 69.

The body case 61 has a cylindrical shape in appearance. The body case 61 has a screw portion 71 formed on part of its outer circumferential face. The body case 61 has the screw portion 71 formed only on an area close to the cap 63. The body case 61 includes a socket 73 inside therein.

The socket 73 is, for example, one in accordance with a Universal Serial Bus (USB) standard. The socket 73 is, for example, a type A of the USB receptacle. The type A of the USB receptacle is widely used with high versatility and is suitable. The body case 61 has an alignment rib 61a formed on part of its outer circumferential face. The alignment rib 61a protrudes radially from the outer circumferential face of the body case 61. The alignment rib 61a is formed between the screw portion 71 and the cap 63 of the body case 61. A plug of the power supply cord, not shown, is inserted into and pulled out of the socket 73. The socket 73 is formed such that the plug of the power supply cord, not shown, is freely inserted thereinto and pulled out thereof.

The standard of the socket 73 is not limited to the USB. For example, the socket 73 may be a cigarette socket or a Hella socket. The cigarette socket and the Hella socket are each widely used as a 12V current power supply with high versatility.

The cap 63 covers rearward and upward of the body case 61. The cap 63 covers the socket 73. The cap 63 covers the socket 73 in a liquid-tight state. When the cap 63 covers the socket 73, the socket 73 is invisible from outside. The cap 63 can be attached to and detached from the body case 61 freely. The cap 63 is preferably made of an elastic member, for example. The cap 63 is made of rubber, for example. Since the cap 63 is an elastic member, the cap 63 can be attached to and detached from the body case 61 easily. The cap 63 is partially fixed to the body case 61. Accordingly, even when the cap 63 is removed and the socket 73 is exposed, the cap 63 is not completely separated from the body case 61. Therefore, the cap 63 is unlikely to be lost after the cap 63 is removed.

The cap 63 has a flange 63a formed so as to protrude from a part of the cap 63 outward in a plane direction of the cap 63. The flange 63a protrudes rearward from the body case 61. The alignment rib 61a described above is covered with the flange 63a in 102-arrow direction, as shown in Fig. 9. The driver can attach and detach the cap 63 by catching the flange 63a with the fingers. The cap 63 can be attached to and detached from the body case 61 easily with the flange 63a.

The socket 73 is connected to one end of the cord 65. The cord 65 extends from the body case 61. The male coupler 67 is connected to the other end of the cord 65. The socket 73 and the male coupler 67 are electrically conductive. As shown in Figs. 5 and 6, the male coupler 67 is attachable and detachable freely to and from a female coupler 68. The female coupler 68 is connected to one end of an electrical source cord 68a. The other end of the electrical source cord 68a is electrically connected to a battery, not shown, of the straddled vehicle. The female coupler 68 is electrically connected to the electrical source cord 68a extending from the battery not shown. Power in accordance with the USB standard is supplied to the electrical source cord 68a via a voltage converter not shown. Accordingly, power in accordance with the USB standard is supplied to the socket 73.

As shown in Figs. 8 and 9, the body case 61 is fixed to the air guide 55 with the latch 69. The body case 61 is fixed to the ceiling portion 55b by turning the latch 69 into the screw portion 71.

As shown in Fig. 8, the ceiling portion 55b has an insertion opening 75 at its attachment projection 55c. The insertion opening 75 is a through hole. The insertion opening 75 is formed at a rear part and an upper part of the attachment projection 55c. The insertion opening 75 has an internal diameter larger than an outer diameter of the body case 61 in a direction where the cord 65 extends. The internal diameter of the insertion opening 75 is larger than an outer diameter of the screw portion 71. As shown in Fig. 9, the ceiling portion 55b has a recess 55d rearward of the cap 63. The recess 55d is positioned below the flange 63a of the cap 63. The recess 55d is positioned lower than the ceiling portion 55b.

As shown in Figs. 9, 10, and 12, the insertion opening 75 has a notch 75a. The notch 75a extends rearward from a rear part of the insertion opening 75. The notch 75a is formed at a part of an inner circumference face of the insertion opening 75 in a direction of the recess 55d. The notch 75a protrudes in a radial direction of the insertion opening 75. The notch 75a has a dimension where the alignment rib 61a of the body case 61 is inserted. In other words, the notch 75a is formed so as to be slightly larger than the alignment rib 61a. The rib 61a of the body case 61 is inserted into the notch 75a, leading to prevention of the body case 61 from rotating around a longitudinal axis.

The notch 75a is longer than the alignment rib 61a in a radial direction of the insertion opening 75. In other words, the alignment rib 61a is shorter than the notch 75a in a radial length of the insertion opening 75. Consequently, the notch 75a is not closed while the body case 61 is inserted into the insertion opening 75 and the alignment rib 61a is inserted into the notch 75a. That is, the notch 75a has a gap. The gap is present between the notch 75a and the alignment rib 61a. Thereby, rain drops fall down from the gap of the notch 75a. Consequently, rain drops are never stored in the recess 55d. As a result, the power supply connector 59 from which the cap 63 is removed can be suppressed from being under water.

The power supply connector 59 is attached to the attachment projection 55c in such a configuration as described above. The power supply connector 59 includes a body case 61 whose longitudinal axis (long axis) has a predetermined angle θ relative to the vehicle front-back direction X. The predetermined angle is approximately 45 degrees, for example. Thereby, the plug for the power supply cord not shown is inserted into the power supply connector 59 in the forward and downward direction. The plug of the power supply cord not shown is pulled out from the power supply connector 59 in the rearward and upward direction. That is, the power supply cord not shown is inserted into the power supply connector 59 in the forward and downward direction and is pulled out from the power supply connector 59 in the rearward and upward direction.

As shown in Figs. 6 and 7, the tank shroud 41L includes a cover 81. The cover 81 is located forward of the power supply connector 59. The cover 81 covers the power supply connector 59 from forward in the vehicle front-back direction X.

Specifically, the cover 81 covers the body case 61 and the cord 65 from forward. The cover 81 is preferably an elastic member. The cover 81 is made of rubber, for example. The cover 81 has an opening 81a rearward in the vehicle front-back direction X. The cover 81 is opened in a downstream direction of the opening 57. The cover 81 has a bowl shape, for example, that bulges forward. Accordingly, heat can be released in the downstream direction of the opening 81a in the cover 81 even when the body case 61, the cord 65, the male coupler 67, or the female coupler 68 is heated by supplying electricity. This results in suppression of heating of the power supply connector 59 and the like.

Moreover, the cover 81 covers only upstream of the opening 57. As shown in Fig. 4(a), the cover 81 only closes the opening 57 partially, seen from forward in the vehicle front-back direction X. The cover 81 does not close the entire of the opening 57. The cover 81 allows air flowing from the opening 57 to exhaust through the air grille 51. Accordingly, heat can be released by air flowing from the opening 57 to the air grille 51 even when the body case 61, the cord 65, the male coupler 67, or the female coupler 68 is heated by supplying electricity. This results in more suppression of heating of the power supply connector 59 and the like.

The cover 81 covers the body case 61 and the cord 65 from forward. Consequently, the body case 61 and the cord 65 are invisible from the opening 57 of the tank shroud 41L. This results in enhanced aesthetics of the straddled vehicle 1.

The coupler formed by connection of the male coupler 67 and the female coupler 68 is covered with the cover 81 from forward. Accordingly, the cover 81 makes the male coupler 67 and the female coupler 68 invisible from forward through the opening 57 of the tank shroud 41L. This results in enhanced aesthetics of the straddled vehicle 1.

Moreover, the cover 81 is an elastic member. The cover 81 is made of rubber, for example. As a result, the body case 61 and the cord 65 can be accessed simply by turning the cover 81 without removing the cover 81 during maintenance. Thus, the maintainability can be improved.

The power supply connector 59 provided in such a manner as described above is visible on the upper face of the tank shroud 41L in side view of the vehicle, as shown in Figs. 1 and 4(c). Accordingly, the power supply connector 59 partially protrudes upward of the tank shroud 41L. Consequently, the driver can easily connect the power supply cord to the power supply connector 59.

The power supply connector 59 is visible on the upper face of the tank shroud 41L in front view of the vehicle, as shown in Figs. 2 and 4(a). Accordingly, the power supply connector 59 partially protrudes upward of the tank shroud 41L. Consequently, the driver can easily connect the power supply cord to the power supply connector 59.

According to this embodiment, the power supply connector 59 is provided on the tank shroud 41L such that the power supply cord is inserted into the power supply connector 59 in the forward and downward direction and is pulled out from the power supply connector 59 in the rearward and upward direction. Consequently, the power supply connector 59 is easily visible to the driver even when the driver sits astride the straddled vehicle 1. As a result, it is easy for the driver to attach the power supply cord to the power supply connector 59.

Moreover, among members constituting the tank shroud 41L, the power supply connector 59 is attached to the ceiling portion 55b of the air guide 55. Consequently, the power supply connector 59 is easily visible to the driver while the driver sits astride the straddled vehicle 1. Moreover, the driver can easily access the ceiling portion 55b of the tank shroud 41L. Consequently, it is easy for the driver to connect the power supply cord to the power supply connector 59.

The body case 61 includes the cap 63 for covering the socket 73. The cap 63 is moved upward and is opened. The ceiling portion 55b includes the recess 55d. The recess 55d is located rearward of the cap 63. Consequently, it is easy for the driver to catch the cap 63 with the fingers. Therefore, the driver can move the cap 63 easily.

Moreover, the cap 63 includes the flange 63a. The flange 63a protrudes rearward from the body case 61. The flange 63a is positioned above the recess 55d. Consequently, it is easier for the driver to catch the flange 63a with the fingers. Therefore, the driver can move the cap 63 easily.

Connection of the male coupler 67 to the female coupler 68 makes electrical connection between the electrical source cord, not shown, extending from the battery, and the cord 65. The male coupler 67 and the female coupler 68 make easy connection between the power supply connector 59 attached to the tank shroud 41L and the battery.

The power supply connector 59 is provided on the left tank shroud 41L. The left tank shroud 41L is located at a low position while the straddled vehicle 1 stops and is inclined leftward by a side stand. The driver is normally on the left side of the straddled vehicle 1, and thus the power supply connector 59 is easily visible to the driver. Moreover, the driver easily applies force when inserting the power supply cord into the power supply connector 59. As a result, the driver can easily connect the power supply cord to the power supply connector 59.

Here, a correspondence of the construction between the above embodiment and the present invention is as under.

The tank shroud 41 (41L) corresponds to the "side cover" in the present invention. The air scoop 47 and the inner panel 49 correspond to the "outer panel member" in the present invention. The air guide 55 and the ceiling portion 55b correspond to the "ceiling member" in the present invention. The female coupler 68 corresponds to the "first coupler" in the present invention. The male coupler 67 corresponds to the "second coupler" in the present invention. The male coupler 67 and the female coupler 68 correspond to the "coupler" in the present invention.
(1) In the embodiment described above, the power supply connector 59 is provided on the left tank shroud 41L. Alternatively, the power supply connector 59 may be provided on the right tank shroud 41R. Moreover, a power supply connector 59 may be provided on each of the tank shrouds 41L and 41R.
(2) In the embodiment described above, the cover 81 with the opening 81a is provided. Alternatively, such a configuration is adoptable that the cover 81 also closes a downstream side.
(3) In the embodiment described above, the power supply connector 59 is provided on the ceiling portion 55b of the air guide 55. Alternatively, the power supply connector 59 may be provided on another part of the air guide 55 or another member such as the duct 53. Moreover, the power supply connector 59 is attached to the attachment projection 55c of the air guide 55. Alternatively, the power supply connector 59 may be directly attached to the ceiling portion 55b of the air guide 55.
(4) In the embodiment described above, the power supply connector 59 is attached such that the power supply connector 59 includes the body case 61 whose longitudinal axis has an upward angle θ of approximately 45 degrees relative to the vehicle front-back direction X. However, the power supply connector 59 only needs to be provided on the tank shroud 41 in such a manner that the plug for the power supply cord not shown is inserted into the power supply connector 59 in the forward and downward direction and is pulled out from the power supply connector 59 in the rearward and upward direction.
(5) In the embodiment described above, the body case 61 includes the alignment rib 61a. However, it is not always necessary that the body case 61 includes the alignment rib 61a.
(6) In the embodiment described above, the notch 75a is longer than the alignment rib 61a.
(7) In the embodiment described above, the air guide 55 includes the recess 55d in the ceiling portion 55b.
(8) In the embodiment described above, the cord 65 is attachable and detachable freely to and from the battery with the male coupler 67 and the female coupler 68. Alternatively, the cord 65 may be directly connected to the battery.
(9) In the embodiment described above, the power supply connector 59 is visible in front view and side view of the vehicle. Alternatively, the power supply connector 59 may be invisible in front view of the vehicle. The power supply connector 59 may be invisible in side view of the vehicle. The power supply connector 59 may be invisible both in front view and side view of the vehicle. Alternatively, the power supply connector 59 may be visible in either front view or side view of the vehicle.
(10) In the embodiment described above, the tank shroud 41 extends from the fuel tank 27 to the head tube 5 to cover the head tube 5 partially. Alternatively, the tank shroud 41 may only overlap the fuel tank 27 in side view of the vehicle and not cover the head tube 5 partially. Moreover, the tank shroud 41 may extend from the fuel tank 27 to a front side of the head tube 5 to cover an upper part of the front suspension. The tank shroud 41 may be arranged rightward and leftward of a radiator (with no numeral) configured to cool the engine 25. The tank shroud 41 may cover at least part of the radiator (with no numeral). Moreover, the tank shroud 41 may extend to the head tube 5 and be connected to a rear side of a cowl including a headlight.

### Reference Signs List

- 1: straddled vehicle
- 3: body frame
- 5: head tube
- 25: engine
- 41, 41L, 41R: tank shroud
- 43: fuel tank cover
- 45: attachment notch
- 47: air scoop
- 47a: recess
- 49: inner panel
- 49a: recess
- 51: air grille
- 51a: outlet
- 53: duct
- 55: air guide
- 55a: recess
- 55b: ceiling portion
- 55c: attachment projection
- 55d: recess
- 57: opening
- 59: power supply connector
- 61: body case
- 61a: alignment rib
- 63: cap
- 65: cord
- 67: male coupler
- 68: female coupler
- 73: socket
- 75: insertion opening
- 75a: notch
- 81: cover

## Claims

1. A straddled vehicle (1), comprising:
a frame (3) provided with a head tube (5) on its front part with regard to a vehicle front-back direction (X);
a fuel tank (27) configured to store a fuel and attached to a part of the frame (3) more rearward than the head tube (5) with regard to the vehicle front-back direction (X);
a side cover (41) overlapping the fuel tank (27) in side view of the vehicle; and
a power supply connector (59) provided on the side cover (41) and configured to supply power to an electronic device, wherein
the power supply connector (59) is configured such that a power supply cord can be inserted into the power supply connector (59) in a forward and downward direction and pulled out from the power supply connector (59) in a rearward and upward direction with regard to the vehicle front-back direction (X) and a vehicle up-down direction (Z), the power supply connector (59) includes a body case (61), and a cord (65) extending from the body case (61), **characterized in that** the side cover (41) has an opening (57) in its front part with regard to the vehicle front-back direction (X), and the side cover (41) further includes a cover (81) configured to cover at least the body case (61) and the cord (65) from forward with regard to the vehicle front-back direction (X).

2. The straddled vehicle (1) according to claim 1, **characterized in that** the cover (81) is an elastic member.

3. The straddled vehicle (1) according to claim 1, **characterized in that** the cover (81) is opened in a downstream direction of the opening (57).

4. The straddled vehicle (1) according to any of claims 1 to 3, **characterized in that** the side cover (41) includes an outer panel member (47, 49) arranged more outward than the fuel tank (27) and a ceiling member (55, 55b) extending from the fuel tank (27) to an upper inner wall of the outer panel member (47, 49), and
the power supply connector (59) is attached to the ceiling member (55, 55b).

5. The straddled vehicle (1) according to claim 4, **characterized in that** the body case (61) has a cylindrical shape and includes an alignment rib (61a) on a part of its outer circumferential face,
the ceiling member (55, 55b) has an insertion opening (75) for inserting the body case (61) and a notch (75a) for housing the alignment rib (61a) and aligning the body case (61) around an axis, and
the notch (75a) is longer than the alignment rib (61a) in a diametrical direction of the body case (61).

6. The straddled vehicle (1) according to claim 5, **characterized in that** the body case (61) includes a detachable cap (63) for covering a socket (73) connected to the cord (65),
the cap (63) is configured to be movable upward with regard to the vehicle up-down direction (Z) from an upper face of the ceiling member (55, 55b) and to open the power supply connector (59), and
the ceiling member (55, 55b) includes a recess rearward of the cap (63) with regard to the vehicle front-back direction (X).

7. The straddled vehicle (1) according to any of claims 1 to 6, **characterized by:**
a coupler having a first coupler (68) connected to an electrical source cord (68a) extending from a battery and a second coupler (67) detachably connected to the cord (65).

8. The straddled vehicle (1) according to claim 7, **characterized in that** the coupler having the first coupler (68) and the second coupler (67) connected to each other is covered with the cover (81) from forward with regard to the vehicle front-back direction (X).

9. The straddled vehicle (1) according to any of claims 1 to 6, **characterized in that** the body case (61) with a longitudinal axis thereof having a predetermined angle (θ) relative to the vehicle front-back direction (X) of approximately 45 degrees.

10. The straddled vehicle (1) according to any of claims 1 to 9, **characterized in that** a right part and a left part of the side cover (41) are arranged on a right side and a left side of the fuel tank (27), respectively, and
the power supply connector (59) is provided on the left part of the side cover (41L) selected from the left part and the right part of the side cover (41L, 41R).

11. The straddled vehicle (1) according to any of claims 1 to 10, **characterized in that** the power supply connector (59) is visible on an upper face of the side cover (41) in side view of the vehicle.

12. The straddled vehicle (1) according to claim 1 to 11, **characterized in that** the power supply connector (59) is visible on an upper face of the side cover (41) in front view of the vehicle.

## Patentansprüche

1. Ein Spreizsitzfahrzeug (1), das umfasst:
einen Rahmen (3), der an seinem vorderen Teil in Bezug auf die Fahrzeug-Vorder-Rück-Richtung (X) mit einem Kopfrohr (5) vorgesehen ist;
einen Kraftstofftank (27), der zur Speicherung von Kraftstoff ausgelegt ist und an einem Teil des Rahmens (3) angebracht ist, der in Bezug auf die Fahrzeug-Vorder-Rück-Richtung (X) hinter dem Kopfrohr (5) liegt;
eine Seitenabdeckung (41), die den Kraftstofftank (27) in der Seitenansicht des Fahrzeugs überlappt; und
einen Stromversorgungsanschluss (59), der an der Seitenabdeckung (41) vorgesehen ist und zur Stromversorgung einer elektronischen Vorrichtung konfiguriert ist, wobei
der Stromversorgungsanschluss (59) so konfiguriert ist, dass ein Stromversorgungskabel in Bezug auf die Fahrzeug-Vorder-Rück-Richtung (X) und die Fahrzeug-Auf-Ab-Richtung (Z) in Vorwärts- und Abwärtsrichtung in den Stromversorgungsanschluss (59) eingeführt und in Rückwärts- und Aufwärts-Abwärts-Richtung aus dem Stromversorgungsanschluss (59) herausgezogen werden kann, der Stromversorgungsanschluss (59) enthält ein Gehäuse (61) und ein vom Gehäuse (61) ausgehendes Kabel (65), **dadurch gekennzeichnet, dass** die Seitenabdeckung (41) in ihrem vorderen Teil in Bezug auf die Fahrzeug-Vorder-Rück-Richtung (X) eine Öffnung (57) aufweist und die Seitenabdeckung (41) ferner eine Abdeckung (81) enthält, die so konfiguriert ist, dass sie zumindest das Gehäuse (61) und das Kabel (65) von vorne in Bezug auf die Fahrzeug-Vorder-Rück-Richtung (X) abdeckt.

2. Das Spreizsitzfahrzeug (1) gemäß Anspruch 1, **dadurch gekennzeichnet, dass** die Abdeckung (81) ein elastisches Element ist.

3. Das Spreizsitzfahrzeug (1) gemäß Anspruch 1, **dadurch gekennzeichnet, dass** die Abdeckung (81) in einer stromabwärtigen Richtung der Öffnung (57) geöffnet ist.

4. Das Spreizsitzfahrzeug (1) gemäß irgendeinem der Ansprüche 1 bis 3, **dadurch gekennzeichnet, dass** die Seitenabdeckung (41) ein Außenpaneelelement (47, 49), das weiter außen als der Kraftstofftank (27) angeordnet ist, und ein Deckenelement (55, 55b) umfasst, das sich vom Kraftstofftank (27) zu einer oberen Innenwand des Außenpaneelelements (47, 49) erstreckt, und
der Versorgungsanschluss (59) am Deckenelement (55, 55b) angebracht ist.

5. Das Spreizsitzfahrzeug (1) gemäß Anspruch 4, **dadurch gekennzeichnet, dass** das Gehäuse (61) eine zylindrische Form aufweist und eine Ausrichtungsrippe (61a) an einem Teil seiner Außenumfangsfläche enthält,
das Deckenelement (55, 55b) eine Einführöffnung (75) zum Einführen des Gehäuses (61) und eine Nut (75a) zum Aufnehmen der Ausrichtungsrippe (61a) und zum Ausrichten des Gehäuses (61) um eine Achse aufweist, und
die Nut (75a) in einer Durchmesserrichtung des Gehäuses (61) länger ist als die Ausrichtungsrippe (61a).

6. Das Spreizsitzfahrzeug (1) gemäß Anspruch 5, **dadurch gekennzeichnet, dass** das Gehäuse (61) eine abnehmbare Kappe (63) zum Abdecken einer mit dem Kabel (65) verbundenen Buchse (73) enthält,
die Kappe (63) so konfiguriert ist, dass sie in Bezug auf die Fahrzeug-Auf-Ab-Richtung (Z) von einer Oberseite des Deckenelements (55, 55b) nach oben bewegbar ist und den Stromversorgungsanschluss (59) öffnet, und
das Deckenelement (55, 55b) eine Aussparung hinter der Kappe (63) in Bezug auf die Fahrzeug-Vorder-Rück-Richtung (X) enthält.

7. Das Spreizsitzfahrzeug (1) gemäß irgendeinem der Ansprüche 1 bis 6,
**gekennzeichnet durch**:
einen Koppler, der einen ersten Koppler (68), der mit einem Stromkabel (68a) verbunden ist, das sich von einer Batterie erstreckt, und einen zweiten Koppler (67), der lösbar mit dem Kabel (65) verbunden ist, hat.

8. Das Spreizsitzfahrzeug (1) gemäß Anspruch 7, **dadurch gekennzeichnet, dass** der Koppler, der den ersten Koppler (68) und den zweiten Koppler (67) aufweist, die miteinander verbunden sind, mit der Abdeckung (81) von vorne in Bezug auf die Fahrzeug-Vorder-Rück-Richtung (X) abgedeckt ist.

9. Das Spreizsitzfahrzeug (1) gemäß irgendeinem der Ansprüche 1 bis 6, **dadurch gekennzeichnet, dass** das Gehäuse (61) mit seiner Längsachse einen vorbestimmten Winkel (θ) von etwa 45 Grad relativ zur Fahrzeug-Vorder-Rück-Richtung (X) aufweist.

10. Das Spreizsitzfahrzeug (1) gemäß irgendeinem der Ansprüche 1 bis 9, **dadurch gekennzeichnet, dass** ein rechter Teil und ein linker Teil der Seitenabdeckung (41) jeweils auf der rechten Seite und der linken Seite des Kraftstofftanks (27) angeordnet sind und
der Stromversorgungsanschluss (59) an dem linken Teil der Seitenabdeckung (41L) vorgesehen ist, der aus dem linken Teil und dem rechten Teil der Seitenabdeckung (41L, 41R) ausgewählt ist.

11. Das Spreizsitzfahrzeug (1) gemäß irgendeinem der Ansprüche 1 bis 10, **dadurch gekennzeichnet, dass** der Stromversorgungsanschluss (59) auf einer Oberseite der Seitenabdeckung (41) in der Seitenansicht des Fahrzeugs sichtbar ist.

12. Das Spreizsitzfahrzeug (1) gemäß Anspruch 1 bis 11, **dadurch gekennzeichnet, dass** der Stromversorgungsanschluss (59) auf einer Oberseite der Seitenabdeckung (41) in der Vorderansicht des Fahrzeugs sichtbar ist.

## Revendications

1. Véhicule à enfourcher (1), comprenant :
un châssis (3) pourvu d'un tube de tête (5) sur sa partie avant selon la direction avant-arrière du véhicule (X) ;
un réservoir de carburant (27) configuré pour stocker du carburant et attaché à une partie du châssis (3) plus en arrière que le tube de tête (5) selon la direction avant-arrière du véhicule (X) ;
un carénage latéral (41) recouvrant le réservoir de carburant (27) en vue latérale du véhicule ; et
un connecteur d'alimentation (59) pourvu sur le carénage latéral (41) et configuré pour alimenter un dispositif électronique,
dans lequel le connecteur d'alimentation (59) est configuré de telle sorte qu'un cordon d'alimentation puisse être inséré dans le connecteur d'alimentation (59) vers l'avant et vers le bas et retiré du connecteur d'alimentation (59) vers l'arrière et vers le haut selon la direction avant-arrière du véhicule (X) et la direction haut-bas du véhicule (Z), et le connecteur d'alimentation (59) inclut un boîtier (61) et un cordon (65) qui s'étend hors du boîtier (61),
**caractérisé en ce que** le carénage latéral (41) comporte une ouverture (57) dans sa partie avant selon la direction avant-arrière du véhicule (X), et **en ce que** le carénage latéral (41) inclut en outre un carénage (81) configuré pour recouvrir au moins le boîtier (61) et le cordon (65) depuis l'avant selon la direction avant-arrière du véhicule (X).

2. Véhicule à enfourcher (1) selon la revendication 1, **caractérisé en ce que** le carénage (81) est un élément élastique.

3. Véhicule à enfourcher (1) selon la revendication 1, **caractérisé en ce que** le carénage (81) est ouvert en direction aval de l'ouverture (57).

4. Véhicule à enfourcher (1) selon l'une quelconque des revendications 1 à 3, **caractérisé en ce que**
le carénage latéral (41) inclut un élément de panneau externe (47, 49) agencé plus à l'extérieur que le réservoir de carburant (27) et un élément de plafond (55, 55b) qui s'étend depuis le réservoir de carburant (27) jusqu'à une paroi interne supérieure de l'élément de panneau externe (47, 49), et
le connecteur d'alimentation (59) est attaché à l'élément de plafond (55, 55b).

5. Véhicule à enfourcher (1) selon la revendication 4, **caractérisé en ce que**
le boîtier (61) présente une forme cylindrique et inclut une nervure d'alignement (61a) sur une partie de sa face circonférentielle externe,
l'élément de plafond (55, 55b) comporte une ouverture d'insertion (75) pour insérer le boîtier (61), ainsi qu'une encoche (75a) pour loger la nervure d'alignement (61a) et aligner le boîtier (61) autour d'un axe, et
l'encoche (75a) est plus longue que la nervure d'alignement (61a) en direction diamétrale du boîtier (61).

6. Véhicule à enfourcher (1) selon la revendication 5, **caractérisé en ce que**
le boîtier (61) inclut un capuchon détachable (63) destiné à recouvrir une prise (73) connectée au cordon (65),
le capuchon (63) est configuré pour être mobile vers le haut selon la direction haut-bas du véhicule (Z) depuis une face supérieure de l'élément de plafond (55, 55b) et pour ouvrir le connecteur d'alimentation (59), et
l'élément de plafond (55, 55b) inclut un renfoncement à l'arrière du capuchon (63) selon la direction avant-arrière du véhicule (X).

7. Véhicule à enfourcher (1) selon l'une quelconque des revendications 1 à 6, **caractérisé par** :
un connecteur comportant un premier connecteur (68) connecté à un cordon d'alimentation électrique (68a) qui s'étend depuis une batterie, et un deuxième connecteur (67) connecté de manière détachable au cordon (65).

8. Véhicule à enfourcher (1) selon la revendication 7, **caractérisé en ce que** le connecteur comportant le premier connecteur (68) et le deuxième connecteur (67) connectés l'un à l'autre est recouvert par le carénage (81) depuis l'avant selon la direction avant-arrière du véhicule (X).

9. Véhicule à enfourcher (1) selon l'une quelconque des revendications 1 à 6, **caractérisé en ce que** le boîtier (61) présente un axe longitudinal ayant un angle prédéterminé (θ) selon la direction avant-arrière du véhicule (X) d'environ 45 degrés.

10. Véhicule à enfourcher (1) selon l'une quelconque des revendications 1 à 9, **caractérisé en ce que**
une partie droite et une partie gauche du carénage latéral (41) sont agencées respectivement sur le côté droit et sur le côté gauche du réservoir de carburant (27), et
le connecteur d'alimentation (59) est pourvu sur la partie gauche du carénage latéral (41L), sélectionnée parmi la partie gauche et la partie droite du carénage latéral (41L, 41R).

11. Véhicule à enfourcher (1) selon l'une quelconque des revendications 1 à 10, **caractérisé en ce que** le connecteur d'alimentation (59) est visible sur une face supérieure du carénage latéral (41) en vue latérale du véhicule.

12. Véhicule à enfourcher (1) selon l'une quelconque des revendications 1 à 11, **caractérisé en ce que** le connecteur d'alimentation (59) est visible sur une face supérieure du carénage latéral (41) en vue de face du véhicule.
